**Europäisches Patentamt**

**European Patent Office**

**Office européen des brevets**

(19)

(11) Veröffentlichungsnummer : **0 114 687**
**B1**

(12)

# EUROPÄISCHE PATENTSCHRIFT

(45) Veröffentlichungstag der Patentschrift :
06.05.87

(51) Int. Cl.⁴ : **E 04 B   1/80**

(21) Anmeldenummer : 84100598.6

(22) Anmeldetag : 20.01.84

(54) **Wärmedämmplatte mit einer Umhüllung und einem in der Umhüllung verdichteten teilchenförmigen, hochdispersen Wärmedämmaterial, sowie Verfahren zu ihrer Herstellung und Vorrichtung zur Durchführung des Verfahrens.**

(30) Priorität : 24.01.83 DE 3302252
13.04.83 DE 8310974 U
30.12.83 DE 8337692 U

(43) Veröffentlichungstag der Anmeldung :
01.08.84 Patentblatt 84/31

(45) Bekanntmachung des Hinweises auf die Patenterteilung : 06.05.87 Patentblatt 87/19

(84) Benannte Vertragsstaaten :
AT BE CH DE FR GB IT LI LU NL SE

(56) Entgegenhaltungen :
DE-B- 2 036 124

(73) Patentinhaber : **Grünzweig + Hartmann und Glasfaser AG**
**Bürgermeister-Grünzweig-Strasse 1-47**
**D-6700 Ludwigshafen am Rhein (DE)**

(72) Erfinder : **Kummermehr, Hans**
**Prinzregentenstrasse 25a**
**D-6700 Ludwigshafen (DE)**
Erfinder : **Sistermann, Klaus**
**In der Almel 37**
**D-6730 Neustadt (DE)**

(74) Vertreter : **Kuhnen, Wacker & Partner**
**Schneggstrasse 3-5 Postfach 1729**
**D-8050 Freising (DE)**

EP 0 114 687 B1

**Beschreibung**

Die Erfindung betrifft eine Wärmedämmplatte mit einer Umhüllung und einem in der Umhüllung verdichteten teilchenförmigen, hochdispersen Wärmedämmaterial, nach dem Oberbegriff des Anspruchs 1, sowie ein zu ihrer Herstellung besonders geeignetes Verfahren und eine zur Durchführung des Verfahrens besonders geeignete Vorrichtung.

Aus der DE-B-1 954 992 ist in eine flexible Umhüllung eingeschlossenes Wärmedämmaterial beispielsweise auf der Basis von expandierter Kieselerde bekannt, welches im Inneren der Umhüllung verdichtet ist und auf die Umhüllung einen Druck ausübt. Durch die straff das verdichtete Wärmedämmaterial umspannende Umhüllung wird dessen mechanische Festigkeit verbessert und werden Absetzbewegungen etwa bei Erschütterungen minimiert. Die Umhüllung kann dabei wahlweise für Gas durchlässig oder undurchlässig sein und nahtlos oder mit einer Naht gefertigt sein. Eine für Gas durchlässige, für die Teilchen des Füllmaterials aber natürlich undurchlässige Umhüllung wird dann in Betracht gezogen, wenn nach dem Einbau des verdichteten und umhüllten Wärmedämmaterials eine teilweise Evakuierung von Luft aus dem die Dämmung enthaltenden Raum erfolgen soll, um durch verminderten Luftdruck im Bereich des Wärmedämmaterials die Dämmwirkung im Betrieb durch Erhöhung der freien Weglänge der Luftmoleküle zu verbessern. Beim Anlegen von Unterdruck zur Erzielung einer solchen teilweisen Evakuierung an der Einbaustelle entweicht dann Luft aus dem Dämmaterial durch die Umhüllung hindurch.

Dabei wird das Dämmaterial in Schlauchform hergestellt und beispielsweise um die Außenwand eines Behälters herumgewickelt. Bei der Herstellung wird so vorgegangen, daß das pulverförmige Dämmaterial im Zuge der Herstellung der schlauchförmigen Umhüllung in diese hineingedrückt wird, wobei sich der Grad der erzielten Verdichtung nach der Geschwindigkeit richtet, mit der die Umhüllung hergestellt wird, sowie nach der Geschwindigkeit, mit der die Umhüllung mit dem Dämmaterial gefüllt wird. Anschließend kann noch eine Nachverdichtung erfolgen, wenn der so gebildete Schlauchkörper zwischen Walzen hindurchgeführt wird. Eine ebene Platte aus Dämmaterial soll nach der Lehre der DE-B-1 954 992 nicht hergestellt werden.

Aus der DE-C-2 036 124 ist es zur Herstellung von Wärmedämmplatten aus teilchenförmigem Dämmaterial auf der Basis von Kieselsäure-Aerogel bekannt, das Dämmaterial in eine poröse Hülle aus Glasfilamentgewebe sehr geringer Durchlässigkeit für das Dämmaterial, jedoch ausreichend hoher Durchlässigkeit für Luft einzufüllen und dann die gefüllte Umhüllung in einer Presse zu verpressen, wobei die Luft im Zuge des Preßvorganges aus dem Inneren der Umhüllung durch diese hindurch herausgedrückt wird, das teilchenförmige Material infolge der geringen Durchlässigkeit des Glasfilamentgewebes für das Dämmaterial jedoch zurückgehalten wird. Derartige Wärmedämmplatten sind seit geraumer Zeit auf dem Markt und werden in der Praxis dadurch hergestellt, daß ein Zuschnitt eines Glasfasergewebes gefaltet und an zwei Seiten vernäht wird, so daß eine dritte Seite zunächst offen bleibt. Durch diese offene Seite hindurch wird das Dämmaterial eingefüllt, und danach die Umhüllung mit einer Abschlußnaht gänzlich geschlossen. Die kissenförmig vorliegende Umhüllung mit dem pulverförmigen Dämmaterial wird sodann zwischen zwei Pressenplatten eingelegt, die auf ihrer Fläche mit Saugöffnungen versehen sind und im Zuge des Preßvorganges aus dem Dämmeterial ausgetriebene Luft durch die Gewebeöffnungen der Umhüllung hindurchsaugen. Mit dieser Luftströmung dringt pulverförmiges Wärmedämmaterial in die Gewebeöffnungen ein und wird dort verpreßt und verbacken, so daß das Gewebe mit der Oberfläche des verdichteten Wärmedämmateriales verkrallt ist. Dadurch ergibt sich eine relativ hohe Biegefestigkeit der Wärmedämmplatte, jedoch praktisch keine Biegbarkeit, da hierzu im Hinblick auf die innige Verkrallung eine Dehnung des praktisch undehnbaren Glasfilamentgewebes erforderlich wäre.

Um die Biegbarkeit derartiger Platten zu verbessern, ist es aus der DE-A-2 928 695 bekannt, auf die Innenseite des Umhüllungsmaterials ein Trennmittel wie hydrophobierte pyrogene Kieselsäure in geringer Menge aufzubringen, um die geschilderte Verkrallung des Wärmedämmaterials in den Gewebeöffnungen zu vermeiden. Bei sonst völlig gleicher Herstellungsweise liegt dann das Material der Umhüllung ohne mechanische Verbindung an der Oberfläche des verdichteten Wärmedämmaterials an und kann dort gleiten, so daß die Platte entsprechend der Biegbarkeit des verdichteten Wärmedämmaterials etwa zur Anpassung an gebogene Oberflächen in einem Radius gebogen werden kann, der etwa dem 15-fachen oder auch noch weniger der Plattendicke entspricht.

Hierbei ist jedoch zu beachten, daß das Trennmittel in Pulverform nur in einer solchen Menge aufgetragen werden kann, daß die Luftdurchlässigkeit des Glasfilamentgewebes nicht merklich herabgesetzt wird, da bei der Überführung der in Kissenform vorliegenden gefüllten Umhüllung in eine erheblich dünnere Plattenform Luft aus der Umhüllung hindurchtreten muß und über die Pressenplatten abgesaugt wird. Die Nähte der Dämmplatte sind, um ein Entweichen des pulverförmigen Dämmaterials beim Pressen dort zu verhindern, mit starkem Faden und geringen Stichabständen von rund 2 mm vernäht, und weisen dadurch höheren Luftdurchlaßwiderstand auf als das Gewebe, durch welches hindurch daher praktisch der gesamte Luftaustritt aus dem Innenraum der Umhüllung bei der Pressung erfolgt.

Nachteilig bei diesen bekannten Wärmedämmplatten ist die Beschränkung in der Wahl des Materials für die Umhüllung infolge der speziellen, daran zu stellenden Anforderungen. So soll die Umhüllung hohe Luftdurchlässigkeit bei gleichzeitiger Dichtheit gegenüber dem feindispersen pulverförmigen Material aufweisen, eine Anforderung, die insbesondere von entsprechend dicht gearbeitetem Gewebe gut erfüllt wird. Allerdings ist das hygroskopische Wärmedämmaterial über die Öffnungen im Gewebe auch beim späteren Einsatz Umgebungseinflüssen ausgesetzt, und muß daher, sofern der Einsatz dies erfordert, etwa mit einer zusätzlichen Dampfsperre versehen werden, wenn eine Durchfeuchtung vermieden werden soll. Die Erzielung etwa einer Dampfdichtheit erfordert bei einem derartigen Glasfilamentgewebe einen erheblichen zusätzlichen Aufwand und kann überdies nicht immer befriedigend durchgeführt werden.

Eine weitere sehr wesentliche Anforderung an das Material der Umhüllung zumindest an einer der beiden Flachseiten der Wärmedämmplatte ergibt sich aus der Temperaturbelastung im Einsatz. Derartige Wärmedämmplatten werden typischerweise für Wärmedämmungen bei Temperaturen von etlichen 100 °C, bis über 700 °C, eingesetzt. Bei diesen Temperaturen zeigt auch das üblicherweise für die Fäden des Glasfilamentgewebes verwendete Borsilikatglas Rekristallisations- und Zersetzungserscheinungen, so daß die Umhüllung im Einsatz letzlich wegfällt, wenn nicht besondere Maßnahmen hiergegen etwa nach der Lehre der DE-A-3 222 679 getroffen werden, um im Einzelfall eine ausreichend intakte Umhüllung zu behalten. Gegenüber anderen Materialien etwa auf Zellstoffbasis besitzt in diesem Zusammenhang Glasfilamentgewebe den Vorteil einer Zersetzung ohne merkliche Rauchentwicklung oder Geruchsbelästigung bei der Zersetzung, so daß eine solche Zersetzung am Einsatzort zugelassen werden kann. Billigere Materialien auf der Basis von Kunststoff oder Zellstoff hingegen besitzen typischerweise einen unterhalb von etwa 500 °C liegenden Flammpunkt und verbrennen bei der Einsatztemperatur unter äußerst starker Rauchentwicklung und Geruchsbelästigung.

In der Praxis beschränken die geschilderten Anforderungen das Material der Umhüllung auf Glasfilamentgewebe, da bislang keine Materialien gefunden werden konnten, die die Anforderungen ebenso gut erfüllen. Ein solches Glasfilamentgewebe ist jedoch relativ teuer, was zu einem entsprechend hohen Preis der Wärmedämmplatten führt.

Ausgehend von einer Wärmedämmplatte nach der DE-B-2 036 124 oder DE-A-2 928 695 liegt der Erfindung die Aufgabe zugrunde, eine Wärmedämmplatte der im Oberbegriff des Anspruchs 1 angegebenen Gattung zu schaffen, welche die Verwendung von gegenüber Glasfilamentgewebe erheblich billigeren Materialien für die Umhüllung ermöglicht.

Die Lösung dieser Aufgabe erfolgt durch die kennzeichnenden Merkmale des Anspruchs 1.

Dadurch wird bei einer kostengünstigen Verwendung etwa von Papier als Innenschicht und Hauptschicht der Folie vermieden, daß etwa bei einem Einbau der Wärmedämmplatte in einen Wärmespeicherofen mit Temperaturbelastungen über 500 °C das Papier unter starker Qualm- und Geruchsentwicklung verbrennt. Eine entsprechend temperaturbeständige Außenschicht, beispielsweise eine dünne Aluminiumfolie, verhindert einen ausreichenden Luftzutritt zur Innenschicht, so daß diese mit erheblich verminderter, nicht mehr störender Rauchentwicklung und Geruchsbelästigung thermisch zersetzt wird, beispielsweise vercrackt, statt tatsächlich zu verbrennen. Auf diese Weise wird die Verwendung billiger Materialien mit niedrigem Flammpunkt für die Innenschicht der Umhüllung möglich. Die Außenschicht kann dabei sehr dünn sein und, ohne etwa beim Preßvorgang Zugkräften ausgesetzt zu sein, ausschließlich dem Luftabschluß der Innenschicht dienen.

Wenn die Umhüllung gemäß Anspruch 9 Perforationen aufweist, die zumindest die Außenschicht durchsetzen, so kann auch im Zuge des Preßvorganges Luft durch die Verbundfolie hindurch entweichen. Dabei ist entweder das Material der Innenschicht mit ausreichender Luftdurchlässigkeit zu wählen, oder die Perforation auch duch die Innenschicht zu führen. Die Perforationen können so geringen Durchmesser haben, daß besondere Zusatzmaßnahmen gegen ein Entweichen des Dämmaterials beim Preßvorgang nicht erforderlich sind und die Perforationen am Produkt optisch nicht in Erscheinung treten.

Gemäß Anspruch 12 wird — zusätzlich oder alternativ zu einer Perforierung der Verbundfolie — für den Luftaustritt aus der Umhüllung der Bereich der Naht zur Verfügung gestellt, die bei geringer Luftdurchlässigkeit der Umhüllung statt dessen entsprechend gut luftdurchlässig zu halten ist. Dies kann dadurch erfolgen, daß bei einer Nähnaht der Stichabstand in Abhängigkeit von dem gewählten Material der Umhüllung und gegebenenfalls der Fadenstärke so gewählt wird, daß die beiden durch die Naht verbundenen Lagen des Materials der Umhüllung zwischen den Stichen bei innerem Luftüberdruck elastisch ausgeweitet werden und auf diese Weise die Luft aus dem Innenraum der Umhüllung entweichen kann. Dabei wird zwar pulverförmiges Dämmaterial im Nahtbereich mit der Luftströmung aus dem Innenraum der Umhüllung mit herausgerissen, jedoch hat sich überraschend gezeigt, daß dies eine äußerst geringe Materialmenge ist, die nicht wesentlich stört. Der Grund für die überraschend geringe austretende Menge an Dämmaterial liegt gemäß bisherigen Untersuchungen voraussichtlich darin, daß die im Dämmaterial enthaltenen Fasern wie Aluminiumoxidfasern wegen ihrer Länge von üblicherweise etlichen Millimetern in den Ausströmöffnungen der Naht hängen bleiben und dort gewissermaßen wie ein Sieb wirken und nachdrängendes pulverförmiges Dämmaterial zurückhalten. Im übrigen kann auf diese Weise austretendes Dämmaterial relativ problemlos gesammelt und dem Materialmischer für das Dämmaterial wieder zugeführt werden.

Im Falle einer absolut luftundurchlässigen Verbundfolie für die Umhüllung muß die gesamte auszutreibende Luft durch den Nahtbereich hindurch ausgetrieben werden, was gegebenenfalls die Geschwindigkeit des Preßvorganges begrenzt. Soweit die Umhüllung eine gewisse Luftdurchlässigkeit etwa durch Perforation aufweist, kann ein gewisser Teil der Luft auch durch das Material der Umhüllung hindurch austreten, so daß der Preßvorgang beschleunigt werden kann. Wenn die Luftdurchlässigkeit dabei auf weniger als etwa 200 nm/Pa s begrenzt ist, wie dies nach DIN 53120, Teil 2, gemessen wird, was etwa dem 10-fachen der Luftdurchlässigkeit von üblichem Zeitungs- bzw. Rotationsdruckpapier entspricht, so entweicht bei dem innerhalb eines Bruchteils einer Minute ablaufenden Preßvorgang immer noch ein Großteil der Luft durch die entsprechend luftdurchlässige Naht, so daß ein Verkralleffekt zwischen dem Dämmaterial und der Innenseite des Verbundmaterials der Umhüllung mangels ausgeprägter Luftströmung durch die Umhüllung hindurch unterbunden werden kann ; es entstehen dann biegsame Wärmedämmplatten wie nach der Lehre der DE-A-2 928 695. Es kann jedoch auch ein höherer Anteil der Luft durch die Umhüllung hindurch austreten, und so eine biegesteife Wärmedämmplatte wie nach der Lehre der DE-C-2 036 124. erzeugt werden. Im Falle hierzu vorgesehener Perforationen größeren Lochdurchmesser und-/oder größerer Zahl kann die Perforation durch die gesamte Dicke der Verbundfolie hindurchgeführt werden, so daß Dämmaterial beim Preßvorgang in die Perforationsöffnungen eindringen kann und den Perforationsrand der Innenschicht sowie natürlich auch die Innenfläche der Innenschicht vor Luftzutritt schützt. Satt an der Innenschicht anliegendes und mit dieser sowie mit Rändern der Perforationsöffnungen verkralltes Wärmedämmaterial verhindet somit an der Innenseite und den Lochrändern den für eine Verbrennung erforderlichen Luftzutritt, während natürlich in jedem Falle die Außenfläche der Innenschicht im Bereich zwischen den Perforationen durch das luftundurchlässige Material der Außenschicht zuverlässig abgedeckt ist. Werden andererseits nur Perforationen sehr geringen Durchmessers eingebracht, so tritt keine Verkrallung und damit innige Anlage zwischen der Innenseite der Innenschicht und dem Wärmedämmaterial auf, ist jedoch dafür die Abdeckung durch das luftundurchlässige Material der Außenschicht fast unverletzt, so daß die geringfügige Perforation keine für eine Verbrennung ausreichende Zufuhr von Verbrennungluft zur Innenschicht der Verbundfolie zuläßt.

In Anspruch 19 ist ein zur Herstellung einer erfindungsgemäßen Wärmedämmplatte besonders geeignetes Verfahren angegeben. Danach wird erfindungsgemäß nicht oder nicht nur durch die Pressenplatten hindurch, sondern zwischen den Pressenplatten, also am Außenumfang der Wärmedämmplatte, ein Unterdruck erzeugt, um den Luftaustritt dort zu unterstützen. Wenn zwischen den Pressenplatten und der Umhüllung parallel zur Preßfläche liegende Luftströmungskanäle freigehalten werden, so kann etwa durch Perforationen dort austretende Luft ebenfalls seitlich abgesaugt werden. Soweit Wärmedämmaterial beim Pressen in einem störenden Umfang austritt, kann gleichzeitig dessen Absaugung aus dem Pressenbereich und Abscheidung wie Ausfilterung zur Wiedergewinnung erfolgen.

In Anspruch 22 ist eine zur Durchführung des Verfahrens besonders geeignete Vorrichtung angegeben, mit der eine Absaugung lediglich im Bereich des randseitigen Außenumfangs der Umhüllung bzw. des Randes der Pressenplatten erfolgt und zugleich eine Abfuhr von Luft auf dem zur Aufbringung des Drucks wirksamen Bereich der Pressenplatten dadurch erzielt wird, daß die Oberfläche der Pressenplatten eine Konturierung aufweist, die entsprechende seitlich offene Luftströmungskanäle bildet. Wenn nicht die Oberfläche des Pressenstempels selbst mit entsprechenden Nuten oder Vorsprüngen versehen werden soll, so können derartige Luftströmungskanäle gemäß Anspruch 23 mit einer Abdeckung versehen werden, welche entsprechende Luftströmungskanäle bildet. Für eine solche Abdeckung eignen sich gemäß Anspruch 24 insbesondere Gitter mit in unterschiedlichen Ebenen übereinander angeordneten Gitterstäben, grobes Gewebe, Gelege, Gewirke oder dgl.

Die Erfindung wird nachstehend anhand der Zeichnung näher erläutert.

Es zeigt

Figur 1 eine perspektivische Ansicht einer erfindungsgemäßen Wärmedämmplatte,

Figur 2 eine perspektivische Ansicht der Wärmedämmplatte gemäß Fig. 1 nach einem Schnitt gemaß Linie II-II in Fig. 1,

Figur 3 eine vergrößerte Darstellung der Einzelheit im Kreis III/IV in Fig. 2,

Figur 4 eine Fig. 3 entsprechende Darstellung des Nahtbereichs bei Aufweitung durch ausströmende Luft in der Endphase des Preßvorganges, wobei die Pressenplatten strichpunktiert angedeutet sind,

Figur 5 eine gegenüber den Fig. 3 und 4 noch weiter stark vergrößerte Einzelheit gemäß Kreis V in Fig. 2,

Figur 6 in stark vergrößerter Darstellung und in ausgezogenen Linien eine vergrößerte Einzelheit gemäß Kreis VI in Fig. 4.

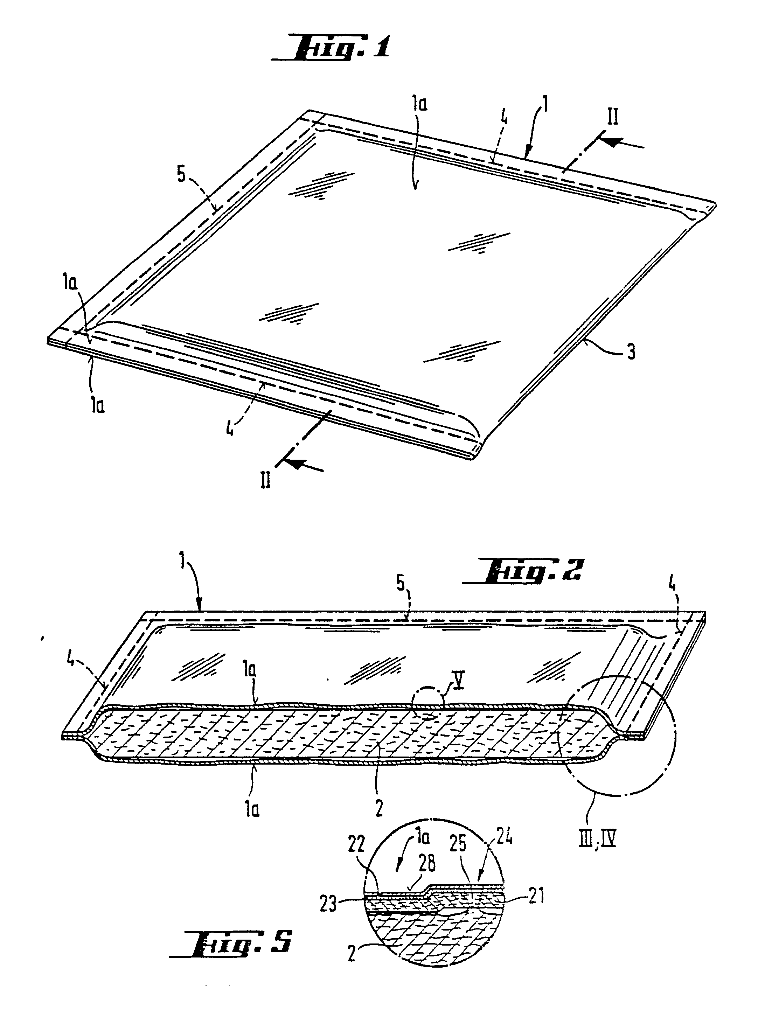

Die in der Zeichnung veranschaulichte Wärmedämmplatte weist eine Umhüllung 1 in Form einer weiter unten noch näher erläuterten Verbundfolie 1a und in der Umhüllung 1 verpreßtes Wärmedämmaterial 2 auf. Die umhüllung 1 ist dadurch gebildet, daß ein Zuschnitt der Verbundfolie 1a an der mit 3 bezeichneten Kante gefaltet und sodann an zwei der restlichen Kanten mit einer Naht 4 geschlossen wird. An der verbleibenden offenen Seite wird unverdichtetes pulverförmiges Dämmaterial 2 eingefüllt, wonach die als offen verbliebene Seite mit einer Abschlußnaht 5 ebenfalls geschlossen wird. Dann liegt die Umhüllung 1 in Form eines Kissens mit dem darin enthaltenen verdichteten Dämmaterial 2 vor. Die kissenförmige Umhüllung mit dem Dämmaterial 2 darin wird sodann zwischen zwei in Fig. 4 veranschaulichte Pressenplatten gelegt und aus der Kissenform in die in Fig. 1 veranschaulichte plattenartige Form gepreßt. Dabei muß Luft aus dem Innenraum der Umhüllung 1 entweichen können. Für das Entweichen der Luft stehen in der weiter unten noch näher geschilderten Weise ganz oder teilweise die Nähte 4 und 5 zur Verfügung.

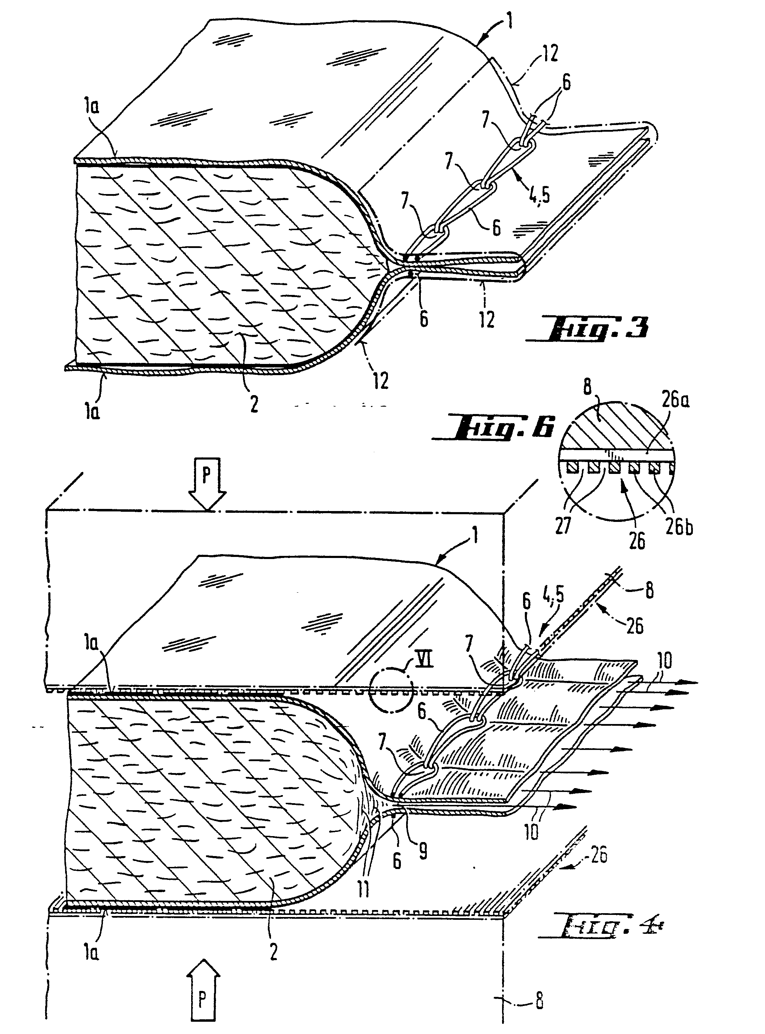

Die Nähte 4 und 5 sind in der aus den Fig. 3 und 4 ersichtlichen Weise als einfädige Überwendlingskettenstichnähte ausgebildet, die im Beispielsfalle mit einem etwa 0,8 mm starken Faden 6 gearbeitet sind. Der Abstand zwischen benachbarten Stichen 7 ist dabei relativ groß gewählt. Er kann einerseits in Abhängigkeit von der Stärke des im Beispielsfalle textilen Fadens 6 so gewählt werden, daß er wenigstens etwa dem 4-fachen, vorzugsweise wenigstens dem 6-fachen und insbesondere wenigstens dem 8-fachen des Fadendurchmessers entspricht. Im Beispielsfalle möge der Abstand zwischen benachbarten Stichen 7 6 mm betragen und damit etwa dem 8-fachen des Durchmessers des Fadens 6 entsprechen.

Das Wärmedämmaterial 2 besteht im Beispielsfalle aus 59,6 Gew.-% pyrogener Kieselsäure, 34,8 Gew.-% Ilmenit als Trübungsmittel und 5,6 Gew.-% Aluminiumoxidfasern als Mineralfaserverstärkung. Die Aluminiumoxidfasern sind in Fig. 4 mit 11 bezeichnet und liegen in einem Gemisch mit einem Maximum der Häufigkeitsverteilung der Faserlänge bei etwa 6 bis 8 mm vor und besitzen einen Faserdurchmesser von einigen Mikrometern.

Soweit nun der Abstand zwischen benachbarten Stichen etwa das 4-fache des Durchmessers des Fadens 6 übersteigt, kann der tatsächliche Abstand auch gemäß Absolutwerten festgelegt werden, und liegt dabei bei wenigstens etwa 3 mm, bevorzugt jedoch höher etwa entsprechend der mittleren Länge der Aluminiumoxidfasern bei 6 bis 8 mm.

In Fig. 3 ist der Bereich der Naht 5 an der fertigen Wärmedämmplatte vergrößert dargestellt, während im Falle der entsprechenden Darstellung in Fig. 4 die Wärmedämmplatte noch zwischen strichpunktiert angedeuteten Pressenplatten 8 angeordnet ist, die soeben ihre Preßbewegung beendet haben. Durch die im Innenraum der Umhüllung 1 beim Preßvorgang komprimierte Luft entweicht diese durch die Nähte 4 und 5 hindurch, wobei im Beispielsfalle angenommen sei, daß der ganze oder weit überwiegende Teil der Luft durch die Nähte 4 und 5 entweicht. Ein Teil dieser im Nahtbereich entweichenden Luft kann dabei gegebenenfalls an den eigentlichen Stichen am Umfang des dort durchtretenden Fadens 6 entweichen. Vor allem aber werden durch die so erzwungene Luftströmung die durch die Nähte 4 und 5 aneinanderliegenden Lagen der Verbundfolie 1a der Umhüllung 1 im Bereich zwischen den Stichen 7 unter Bildung eines Spaltes elastisch ausgeweitet und bilden so kleine Strömungskanäle. Eine solche spaltartige Öffnung 9 ist in Fig. 4 an der Schnittstelle veranschaulicht. Hierdurch entweicht die Luft aus dem Innenraum der Umhüllung 1 gemäß den in Fig. 4 eingezeichneten Pfeilen 10 in einer Strömung durch die Nähte 4 und 5 hindurch. Dabei wird insbesondere zu Anfang der Preßbewegung auch ein gewisser Teil des nahtnahen pulverförmigen Dämmaterials mit ausgeblasen. Bereits kurz nach Beginn der Pressung jedoch fällt die ausgeblasene Menge an Dämmaterial 2 stark ab. Dies hat, soweit ersichtlich, seinen Grund darin, daß die im Dämmaterial enthaltenen Aluminiumoxidfasern 11 an der Mündung des Spaltes 9 zu einem Großteil hängenbleiben und dort ein als Filter wirkendes Netzwerk bilden, welches weiteres Dämmaterial 2 an einer Mitnahme durch die Luftströmung hindert.

Während der bei Abfuhr praktisch der gesamten Luft aus dem Kissen über den Nahtbereich minimale Abstand zwischen benachbarten Stichen 7 einerseits durch die Festigkeit des Materials der Umhüllung 1 und andererseits durch die Fadenstärke begrenzt ist, liegt eine Grenze für den maximalen Abstand zwischen benachbarten Stichen 7 lediglich da, wo beim Preßvorgang zuviel Dämmaterial 2 ausgeblasen würde sowie bei der nachfolgenden Handhabung gegebenenfalls zuviel Dämmaterial herausrieseln könnte, wenn die Spalte 9 nach Wegfall des Innendruckes der Umhüllung 1 nicht mehr ausreichend schließen. Ein Austritt von Dämmaterial 2 beim Preßvorgang auch in relativ erheblicher Menge wäre jedoch tragbar, wenn bei der Füllung der Umhüllung 1 einfach eine entsprechende zusätzliche Menge mit eingefüllt wird und und die ausgetretene Menge an Dämmaterial 2 mit relativ geringem Aufwand aus dem Bereich zwischen den Pressenplatten 8 beseitigt und dem Prozeß wieder zugeführt werden kann. Hierzu ist in nicht näher dargestellter Weise im Bereich der Nähte 4 und 5 an der Pressenvorrichtung eine Absaugeinrichtung vorgesehen, welche austretendes Material automatisch absaugt, durch ein geeignetes Filter aus dem Luftstrom wiedergewinnt und dem Prozeß wieder zuführt. Eine Unterstützung der Luftströmung durch die Spalte 9 der Nähte 4 und 5 hindurch könnte unabhängig von der Absaugung austretenden Dämmaterials 2, oder bei einem bevorzugten Herstellungsverfahren, in einem Zuge hiermit erfolgen. Ein mögliches geringfügiges Herausrieseln von Dämmaterialteilchen, die sich aus dem Preßverbund gelöst haben, nach Fertigstellung der Wärmedämmplatte könnte bei Bedarf durch eine nachträgliche Abdichtung des Bereichs der Nähte 4 und 5 vermieden werden. Eine solche Abdichtung etwa durch in Fig. 3 strichpunktiert veranschaulichte Dichtungsstreifen 12, die über den Nähten 4 und 5 befestigt, beispielsweise geklebt werden können, ist auch aus weiter unten noch näher erläuterten Gesichtspunkten zuweilen zweckmäßig oder auch erforderlich.

Somit kann bei Bedarf der Abstand zwischen benachbarten Stichen 7 auch außerordentlich groß bei mehr als 10 mm gewählt werden und gegebenenfalls auch erheblich größer als die Länge der üblicherweise in dem Dämmaterial 2 enthaltenen Aluminiumoxidfasern 11, wenn mit geringem Aufwand für eine Rückführung austretenden Dämmaterials 2 gesorgt und gegebenenfalls eine nachträgliche Abdichtung der Bereiche der Nähte 4 und 5 vorgenommen wird.

Die Verbundfolie 1a der Umhüllung 1 weist vorteilhaft eine rauhe oder aufgerauhte innere Oberfläche auf. Sofern zumindest der weit überwiegende Teil der Luft durch den Nahtbereich abgeführt wird, ergibt auch eine rauhe Innenoberfläche der Verbundfolie 1a keine Verkrallung mit benachbarten Oberflächenschichten des Dämmaterials 2. Eine solche Rauhigkeit an der Innenseite der Umhüllung 1 ist jedoch im Bereich der Spalte 9 für den geschilderten Effekt einer Zurückhaltung von Aluminiumoxidfasern 11 zur Bildung eines Filters von Vorteil, da die Aluminiumoxidfasern 11 an einer rauhen Oberfläche besser verhaken oder verkrallen können.

Eine solche Rauheit kann außer durch die eigentliche Oberflächenstruktur auch durch eine lokal unebene Ausbildung der Verbundfolie 1a erzielt werden. Hierzu wird die Verbundfolie 1a zweckmäßig in einem gestauchten Zustand verwendet, also etwa gekreppt oder genarbt. Hierzu ergibt sich eine gewünschte Oberflächen Aufrauhung, die jedoch nicht zu einem Verkrallen mit der Oberfläche des gepreßten Dämmaterials 2 führt, wenn zumindest der weit überwiegende Teil der aus dem Kissen auszutreibenden Luft durch den Nahtbereich entweicht. Eine solche Stauchung der Verbundfolie 1a hat darüber hinaus den Vorteil, daß sich eine gewissermaßen konstruktive Materialelastizität ergibt, welche das Schließen der Spalte 9 nach Wegfall des inneren Überdrucks begünstigt. Überdies verbessert eine genarbte Oberfläche auch das Aussehen der Umhüllung 1 angesichts der bei der Handhabung unvermeidlichen leichten Verformungen der Verbundfolie 1a.

Der Aufbau der Verbundfolie 1a mit einer vom Material her luftundurchlässigen Außenschicht 22 ermöglicht eine vollständig dichte Kapselung mit Bezug auf Wasserdichtheit, Dampfdichtheit und gegebenenfalls auch Luftdichtheit. Um insoweit Undichtigkeiten im Bereich der Nähte 4 und 5 zu vermeiden, können diese nach dem Preßvorgang entsprechend nachbehandelt werden, beispielsweise in der bereits weiter oben erläuterten Weise mit einem Abdichtstreifen 12 versehen werden. Es kann jedoch eine ausreichende Dichtheit gegebenenfalls auch durch Versiegelung der Nähte 4 und 5 mit üblichen Klebern wie Silikonharzen, Schellack, Poleyester oder dergleichen erfolgen, je nach den Erfordernissen und Bedingungen des jeweiligen Einsatzfalles. Für eine zumindest weitgehende Dichtheit gegen bestimmte Medien kann auch durch entsprechende Ausbildung der Nähte 4 und 5 selbst gesorgt werden. Dabei bestimmen sich Einzelheiten der Bemessung der Nähte 4 und 5 innerhalb der weiter oben angegebenen Grenzen nach der verwendeten Verbundfolie 1a und nacht Art des verwendeten Nähfadens 6. Bei entsprechend ausrißfestem Material für die Umhüllung 1 kann der Nähfaden 6 auch sehr dünn gewählt werden, beispielsweise mit einem Fadendurchmesser von 0,1 mm. Vorzugsweise liegt die Fadenstärke jedoch über 0,5 mm, jedoch nicht wesentlich über 1 mm, um die Größe der Löcher der Stiche 7 zu begrenzen. Gegebenenfalls kann auch ein vom Material und/oder einem Kräuseleffekt her elastischer Nähfaden 6 verwendet werden, um die Schließbewegung der Spalte 9 beim Wegfall des Überdrucks im Inneren der Umhüllung 1 zu unterstützen und ohne weiteres Zutun zu einer weitgehend dichten gegenseitigen Anlage der Ränder der Verbundfolie 1a im Bereich der Nähte 4 und 5 zu gelangen.

Alternativ zur veranschaulichten Ausführungsform könnten natürlich auch zwei entsprechend kleinere Zuschnitte der Verbundfolie 1a für die Umhüllung 1 verwendet und an allen vier Seiten ringsum mit Nähten 4 oder 5 geschlossen werden. Dies hätte den Vorteil, daß auch im Bereich der Kante 3 ein Luftaustritt erfolgen kann, so daß bei gleichem auszutreibendem Luftvolumen auch hierdurch eine Beschleunigung des Luftaustritts erfolgen würde. Weiterhin könnte dann das Material der Umhüllung 1 an einer Flachseite der Wärmedämmplatte bei Bedarf anders als an der gegenüberliegenden Flachseite gewählt werden, um für die « kalte » und « heiße » Seite der Wärmedämmplatte den jeweiligen Bedingungen angepaßte Stoffe für die Umhüllung 1 zu benutzen. Die Verbundfolie la sollte aber wenigstens auf der « heißen » Seite verwendet werden.

Bei Verwendung eines bei relativ niedriger Temperatur, jedenfalls unter 500 °C, entflammbaren Materials wie Papier oder eines ähnlich preisgünstigen Materials auf der « heißen » Seite der Wärmedämmplatte hat es sich gezeigt, daß das Papier entflammt und unter starker Rauch- und Geruchsentwicklung wegbrennt. Bei Verwendung von gekrepptem Natron-Kraftpapier beispielsweise ergibt sich beim Einbau in einen Wärmespeicherofen nach dessen Inbetriebnahme eine solche Rauch- und Geruchsentwicklung während der Aufheizphase über gut eine halbe Stunde hinweg, daß das Aufheizen in einem geschlossenen Raum praktisch unzumutbar ist. Somit eignen sich gerade die preiswertesten Materialien wie Natron-Kraftpapier, Filterpapier oder dergleichen nicht für die Verwendung als Material für die Umhüllung 1, da derartige Wärmedämmplatten typischerweise bei Temperaturen oberhalb von 400 °C, häufig auch oberhalb von 600 °C eingesetzt werden.

Hier kann erfindungsgemäß dadurch Abhilfe geschaffen werden, daß das Papier oder dergleichen an seiner Außenseite mit einer Außenschicht 22 abgedeckt wird, die — bei einer Temperaturbelastung über maximal eine Stunde hinweg — eine gegenüber dem Flammpunkt der Innenschicht 21 aus Papier oder dergleichen erheblich höhere Zersetzungstemperatur, etwa erheblich oberhalb von 500 °C besitzt. Damit überschreitet die Innenschicht 21 die Temperatur ihres Flammpunktes bei gleichzeitiger Abdeckung durch die Außenschicht 22, die zumindest während der Aufheizphase, also etwa über eine Stunde hinweg, körperlich intakt bleibt und Sauerstoffzutritt zur Innenschicht 21 unterbindet oder zumindest drastisch vermindert. Dadurch kann die Innenschicht 21 aus Papier oder dergleichen nicht entflammen, sondern wird auf andere Weise thermisch zersetzt, im Falle von Papier vercrackt. Dieser Vorgang ist mit erheblich geringerer Rauch- und Geruchsbelästigung verbunden, so daß überraschend die alleinige Maßnahme einer äußeren temperaturbeständigen Abdeckung der Innenschicht in einem Verbundmaterial ausreicht, um die geschilderten Nachteile etwa von Papier im Hochtemperatureinsatz zu vermeiden.

Als Material für die Außenschicht 22 kann grundsätzlich sogar organischer Kunststoff verwendet werden, soweit dieser für den jeweiligen Einsatzfall ausreichend temperaturbeständig ist. Es sind auf dem Markt hochtemperaturbeständige Lacke erhältlich, die bei einer Temperaturbelastung von bis etwa 600 °C zumindest bei begrenzter Einwirkungszeit noch keine merklichen Zersetzungserscheinungen zeigen und in ihrer körpelichen Integrität erhalten bleiben. Diese können bei Bedarf als Außenschicht verwendet werden, wobei infolge der äußerst geringen, lediglich dem Luftabschluß dienenden Schichtdicke eine spätere Zersetzung des Lackes bei längerem Betrieb unschädlich ist und ebenfalls zu keinen untragbaren Belästigungen durch Gasentwicklungen oder dergleichen führt.

Weiterhin kann die Außenschicht 22 aus einer anorganischen mineralischen Schicht gebildet werden, beispielsweise auf der Basis von Kieselgel oder Kieselsol. Derartige Beschichtungsstoffe sind bekannt, wobei für eine Kieselsolbeschichtung wegen weiterer Einzelheiten etwa auf die DE-A-3 248 661 verwiesen werden kann. Schichten auf der Basis von Kieselgel sind vielfach bekannt, etwa in Form von Natrium- oder Kalium-Wasserglasbeschichtungen. Solche anorganischen Beschichtungen zeichnen sich durch gute Temperaturbeständigkeit aus.

Weiterhin kommt als Außenschicht 22 eine metallische Außenschicht in Frage, die beispielsweise aufgedampft sein kann. Unter wirtschaftlichen Gesichtspunkten hat sich jedoch als besonders vorteilhaft eine Verbundfolie 1a mit einer Außenschicht 22 aus einer Metallfolie, insbesondere einer Aluminiumfolie erwiesen. Gegenüber einer Verwendung nackter Aluminiumfolie für die Umhüllung 1, die angesichts der auftretenden Belastungen eine Stärke von wenigstens 50 μm besitzen müßte und schwer zu vernähen ist, braucht die Aluminiumfolie für die Außenschicht 22 lediglich eine Dicke von einigen μm, im Beispielsfalle von 7 μm zu besitzen, da sie über einen Kleber 22 mit der Hauptschicht oder Innenschicht 21 beispielsweise aus Papier verklebt ist oder lediglich als deren Abdeckung dient, während sämtliche auftretenden Kräfte von der erheblich billigeren und dickeren Innenschicht 21 aufgenommen werden können. Bei der in Fig. 5 veranschaulichten Verbundfolie 1a besteht die Innenschicht 21 aus Natron-Kraftpapier, auf die die Aluminiumfolie zur Bildung der Außenschicht 22 über einen im Beispielsfalle organischen Kleber 23 aufgeklebt ist. Für die Zersetzung des organischen Klebers 23 gelten dieselben Gesichtspunkte wie für das Natron-Kraftpapier der Schicht 21, so daß auch der organische Kleber 23 keinen Anlaß zu übermäßigen Belastungen durch Gasentwicklung bei der thermischen Zersetzung gibt.

Eine derartige Verbundfolie 1a ist im Hinblick auf das Material für die Außenschicht 22 vollständig luftundurchlässig, was für gewisse Einsatzfälle anzustreben ist. In diesem Falle muß jedoch die gesamte aus dem Kissen auszutreibende Luft durch den Nahtbereich entweichen, wie dies in der bisherigen Beschreibung auch unterstellt worden ist. Es ist jedoch bevorzugt, zusätzlich zur Luftabfuhr durch den Nahtbereich hindurch und gegebenenfalls auch ohne wesentliche Luftabfuhr durch den Nahtbereich hindurch Luft aus dem Innenraum der Umhüllung 1 durch das Material der Umhüllung 1 abzuführen.

Hierzu ist die Verbundfolie 1a zur Erzeugung feiner Perforationen 24 genadelt. Die Perforationen 24, die in der gewählten stark vergrößerten Darstellung relativ großes Aussehen besitzen, weisen einen Lochdurchmesser von höchstens 1 mm, zweckmäßig jedoch geringer als 0,5 mm, im Beispielsfalle von etwa 0,1 bis 0,2 mm auf und sind entsprechend den Nadelspitzen in Richtung auf die Innenseite der Umhüllung 1 leicht verjüngt. Die Zellstoffasern 25 des die Innenschicht 21 bildenden Natron-Kraftpapiers ragen in die feine Öffnung der Perforationen 24 hinein und wirken dort ähnlich einem Sieb gegen einen Austritt von teilchenförmigen Dämmaterial durch die Perforationen 24 hindurch sowie im Falle sehr kleiner Lochdurchmessers auch gegen einen merklichen Eintritt in die Perforationen 24 hinein. Die Perforationen 24 weisen erhebliche gegenseitige Abstände von mehreren mm, im Beispielsfalle von 5 bis 10 mm im Material der Umhüllung 1a auf. Die Perforationen 24 sind im Beispielsfalle so weiträumig verteilt und klein, daß sie jedenfalls im Falle einer gekreppten Verbundfolie 1a optisch nicht in Erscheinung treten und nur bei genauer Untersuchung überhaupt erkennbar sind. Infolge der geringen Größe der Perforationen und ihres erheblichen gegenseitigen Abstandes wird nur sehr wenig Dämmaterial 2 in die Perforationen 24 hineingerissen und bilden selbst in die Perforationen 24 hineingerissene Teilchen des Dämmaterials 2 keine makroskopische Verankerung, so daß sich kein Verkralleffekt ergibt, sondern die Umhüllung, wie auch in Fig. 2 veranschaulicht ist, schlaff an der Außenseite des Dämmaterials 2 anliegt.

Sofern ein größerer Anteil der Luft, gegebenenfalls die gesamte Luft, durch Perforationen 24 und nicht durch den Nahtbereich entweichen soll, ergeben sich größere Luftdurchmesser für die Perforationen 24 und/oder geringere Abstände. Dann kann Dämmaterial 2 auch besser in die Perforationen 24 eindringen und dort einen Verkralleffekt erzeugen, der zur Aussteifung der Wärmedämmplatte bei Bedarf beiträgt. Durch das in die Perforationen 24 größeren Durchmessers eingedrungene Dämmaterial 2 wird die am Lochrand freiliegende Innenschicht 22 aus Natron-Kraftpapier oder dergleichen gegen die Umgebungsluft abgedeckt und ein merkliches Eindringen von Luft in die Umhüllung 1 verhindert, so daß auch in diesem Falle bei Überschreiten des Flammpunktes für das Material der Innenschicht 21 keine Verbrennungsluft für eine ausgeprägte Flammenbildung zur Verfügung steht.

Soweit Luft durch Perforationen 24 in den Flachseiten der Umhüllung 1 entweicht, sollte diese abgesaugt werden, was grundsätzlich durch die Pressenplatten 8 hindurch in bekannter Weise erfolgen könnte, sofern dafür Sorge getragen ist, daß eine ausreichende Anzahl von Perforationen 24 beim Preßvorgang der Saugströmung zugänglich bleibt. Im Beispielsfalle soll jedoch auch durch den Nahtbereich hindurch eine erhebliche Menge an Luft zusätzlich entweichen, so daß eine Absaugung im Bereich der Nähte 4 und 5 vorgesehen ist und Saugkanäle einer Absaugeinrichtung zwischen den Pressenplatten 8 münden.

Um trotz der Ausübung des Preßdruckes auf die Umhüllung 1 die erforderliche Luftabfuhr an den Flachseiten zu erzielen, weisen die Pressenplatten 8 zur Bildung von Luftströmungskanälen eine Konturierung in Form einer Abdeckung 26 auf, die im Beispielsfalle als Gitter 26 mit Längsstäben 26a und Querstäben 26b ausgebildet ist, welche an den Kreuzungsstellen über den Längsstäben 26a liegen. Die Gitterstäbe 26a und 26b sind somit in unterschiedlichen Ebenen übereinander angeordnet, derart, daß die Querstäbe 26b zwischen den Längsstäben 26a in Längsrichtung verlaufende Luftströmungskanäle freilassen und umgekehrt die Längsstäbe 26a zwischen den Querstäben 26b in Querrichtung verlaufende Luftströmungskanäle 27 freilassen, wenn die Verbundfolie 1a in der Darstellung gemäß Fig. 6 an der Unterseite der Querstäbe 26b anliegt. Die Luftströmungskanäle, von denen in Fig. 6 nur die Luftströmungskanäle 27 sichtbar sind, brauchen nur geringe Höhe von wenigen Millimetern oder auch weniger als 1 mm besitzen und weisen eine Breite entsprechend dem gegenseitigen Abstand der jeweiligen Gitterstäbe 26a oder 26b auf. Sie ermöglichen eine Strömung der aus der Umhüllung 1 austretenden Luft zu den Randbereichen der Pressenplatten 8 hin, wo dann die Absaugung erfolgt. Die Gitterstäbe 26a und 26b können aus einem ausreichendwiderstandsfähigen Kunststoff oder aus Metall, beispielsweise Stahl, bestehen, wobei die Unterseiten der Gitterstäbe 26b die Aufstanzfläche auf der Umhüllung 1 während der Pressung bilden und entsprechend den dabei zulässigen oder gewünschten Flächenpressungen ausgelegt und ausgebildet sein können.

Anstelle eines Gitters können für die Abdeckung 26 auch andere Gebilde verwendet werden, die definierte oder undefinierte Luftströmungskanäle für die gewünschte Luftströmung von der Außenseite der Umhüllung 1 weg zulassen. Daher kann die Abdeckung 26 etwa auch durch Gewebe, Gelege, Gewirke, Geflechte oder dergleichen gebildet sein.

Die Abdeckung 26 hinterläßt entsprechend ihrer Ausbildung Eindrückungen 28 in dem Material der Umhüllung 1. Im Falle der Verwendung glatten Materials für die Umhüllung 1 kann dadurch ein optisch ansprechendes Aussehen ähnlich einer Narbung erzielt werden, da eine glatte Umhüllung 1 bei der Handhabung häufig in der glatten Umgebung gut sichtbare und unschön wirkende Ritzlinien oder dergleichen erhält. Gegenüber gestauchtem, etwa gekrepptem Material für die Umhüllung 1 ergibt sich jedoch durch glattes Material eine bessere Maßhaltigkeit der Wärmedämmplatten, da die große Elastizität in Stauchrichtung fehlt, die bei Verformungen unter dem Pressendrucks zu Maßungenauigkeiten führen kann. Etwa durch ein geeignetes Gewebe zur Bildung der Abdeckung 26 kann eine glatte Verbundfolie 1a zur Erzielung guter Maßhaltigkeit benutzt werden, ohne daß die glatte Oberfläche für die nachfolgende Handhabung zu empfindlich ist.

Nach Entlastung durch den Pressenstempel glätten sich Eindrückungen 28 in vorhersehbarem Umfange unter der Spannung der Umhüllung 1, so daß sich eine geringe Relativbewegung zwischen der Innenseite der Umhüllung 1 und der Außenseite des Dämmaterials 2 ergibt. Diese Relativbewegung kann dazu herangezogen werden, eine auftretende Verkrallung zwischen dem Dämmaterial 2 und der Umhüllung 1 zu beseitigen.

Bei den nachfolgend erläuterten Beispielen wurde stets so vorgegangen, daß zunächst ein Zuschnitt der Verbundfolie 1a für die Umhüllung 1 in Rechteckform 53 cm × 106 cm hergestellt, zur Bildung einer im wesentlichen quadratischen Doppellage entlang der Kante 3 gefaltet und durch zwei von der Kante 3 ausgehende seitliche parallele Nähte 4 geschlossen wurde. Zur Bildung der Nähte 4 wurde ein textiler Faden 6 mit einem Durchmesser von etwa 0,8 mm verwendet. Die Nähte 4 wurden als Überwendlinskettenstichnähte mit einem gegenseitigen Stichabstand von etwa 8 mm ausgeführt. Der so gebildete Sack wurde sodann mit der erforderlichen Menge an Wärmedämmaterial 2 einer Zusammensetzung gefüllt, wie sie weiter oben angegeben ist. Sodann wurde die Umhüllung 1 durch die Naht 5 unter Bildung der Kissenform geschlossen, wobei die Naht 5 ebenso wie die Nähte 4 ausgeführt wurde. Die so gebildete kissenförmige Umhüllung 1 wurde sodann zwischen zwei Pressenplatten 8 auf die gewünschte Dicke gepreßt und die so erhaltene Wärmedämmplatte sodann untersucht und in einem Wärmespeicherofen eingebaut, der sodann aufgeheizt wurde.

Beispiel 1

Natron-Kraftpapier mit einem Flächengewicht von 55 g/m² wurde zur Bildung einer Verbundfolie mit einer Aluminiumfolie von 7 µm Dicke beschichtet, wobei die beiden Schichten durch einen organischen Kleber verklebt wurden. Es erfolgte kein Kreppvorgang.

Diese Verbundfolie 1a für die Umhüllung 1 wies ein Flächengewicht von 81 g/m² bei einer Bruchkraft längs von 88,9 N/15 mm und quer von 43,4 N/15 mm auf. Die Bruchdehnung betrug 1,7 längs und 2,0 % quer, die Berstfestigkeit gemessen nach Schopper-Dalén betrug oberseitig 241 kPa und unterseitig 210 kPa. Hierbei beziehen sich die Begriffe « längs » und « quer » sowie « oberseitig » und « unterseitig » auf die Lage des Papiers bei der Fertigung auf dem Papiermaschinensieb. Die Verbundfolie war absolut luftundurchlässig.

Der Preßvorgang ließ sich ohne jede Schwierigkeit durchführen, jedoch mit geringerer Geschwindigkeit, als er zur Verpressung von Wärmedämmplatten mit Glasfilamentgewebe üblich ist. Die Spalte 9 zwischen den Stichen 7 blieben nach dem Preßvorgang geringfügig aufgeweitet zurück, es war jedoch kein Dämmaterial von außen her sichtbar. Der Preßvorgang wurde mit glatten Pressenplatten durchgeführt, so daß die Außenseite der Umhüllung 1 auch ganz glatt vorlag. Um dieses Aussehen nicht zu stören, dürfte die Umhüllung 1 nur sehr vorsichtig berührt werden. Die erzeugte Wärmedämmplatte war gemäß den in der DE-A-2 928 695 aufgestellten Kriterien, auf die wegen weiterer Einzelheiten Bezug genommen wird, gut biegbar, und die Umhüllung 1 lag locker an der Oberfläche des gepreßten Wärmedämmaterials an.

Beim Einbau in den Wärmespeicherofen zeigte sich nur eine äußerst geringe Rauch- und Geruchsbelästigung beim ersten Aufheizen, ähnlich, wie dies bei ausgerüstetem Glasfilamentgewebe herkömmlicher Wärmedämmplatten zu beobachten ist. Diese Belästigung war durchaus akzeptabel.

Beispiel 2

Natron-Kraftpapier mit einem ebenen Flächengewicht von 70 g·m² wurde mit einer 7 µm starken Aluminiumfolie beschichtet und ebenfalls mit einem organischen Kleber verklebt. Diese Verbundfolie wurde einem Kreppvorgang unterzogen, wobei sich ein Flächengewicht der Verbundfolie von 113 g·m². eine Bruchkraft längs von 67,8 N/15 mm und quer von 48,1 N/15 mm bei einer Bruchdehnung längs von 21.5 % und quer von 3,0 % ergab. wobei die Längsdehnung wie bei allen gekreppten Materialien natürlich quer zu den Kreppwülsten lag. Die Berstfestigkeit betrug oberseitig 132 kPa und unterseitig 110 kPa. Die Folie war ebenfalls absolut luftundurchlässig.

Es zeigten sich dieselben Ergebnisse wie beim Beispiel 1, wobei jedoch die Spalte 9 im Anschluß an den Preßvorgang besser geschlossen vorlagen. Durch lokal etwas unterschiedliche Dehnungen quer zu den Kreppwülsten lag die Umhüllung 1 in manchen Bereichen weniger gut an der Außenseite des Dämmaterials 2 an als an anderen. Eine Verkrallung zwischen dem Dämmaterial 2 und der Innenseite der Umhüllung 1 trat jedoch an keiner Stelle auf. Der Randbereich des Dämmaterials mit der daraufliegenden Umhüllung 1 zu den Nähten hin war nicht völlig sauber ausgebildet, sondern zeigte ganz geringfügige Wellung.

Das Verhalten beim Aufheizen im Wärmespeicherofen entsprach demjenigen beim Beispiel 1.

Beispiel 3

Natron-Kraftpapier mit einem Flächengewicht von 55 g/m² wurde mit einer Aluminiumfolie mit 7 um Dicke beschichtet, wobei für die Klebung ebenfalls ein organischer Kleber verwendet wurde. Sodann wurde die Verbundfolie 30 % gekreppt und mittels einer Nadelwalze von der Seite der Aluminiumfolie her genadelt. Beim Nadelvorgang drangen lediglich die Spitzen der Nadeln in die Verbundfolie ein und durchdrangen diese ganz geringfügig, so daß sich Perforationsöffnungen mit einem Durchmesser von gut 0,1 mm ergaben.

Der Nadelabstand betrug 10 mm in einem Rechteckraster.

Das sich ergebende Flächengewicht der Verbundfolie betrug 105 g/m². Die Bruchkraft betrug längs 34,1 N/15 mm und quer 30,6 N/15 mm. Die Bruchdehnung betrug längs 32,6 % und quer 2,1 %, während die Berstfestigkeit oberseitig bei 55 kPa und unterseitig bei 50 kPa lag. Die Luftdurchlässigkeit betrug 40 nm/Pa s.

Gegenüber den Beispielen 1 und 2 konnte hier die Preßgeschwindigkeit wieder gesteigert werden, im wesentlichen auf die Geschwindigkeit bei der Umhüllung mit Glasfilamentgewebe, da offensichtlich die Perforationen einen solchen Luftaustritt ermöglichten, daß die Belastung der Nähte 4 und 5 durch ausströmende Luft deutlich verringert war. Dennoch lag die Umhüllung 1 locker an den Flachseiten der Wärmedämmplatte an und zeigte sich gegenüber den anderen Beispielen keine Verschlechterung der Biegbarkeit der Platte. An den Perforationen war keinerlei Austritt von Dämmaterial zu erkennen, und auch im Bereich der Stiche 7 und der Spalte 9, die gut geschlossen waren, war selbst mit bewaffnetem Auge nur wenig Wärmedämmaterial sichtbar. Beim Auseinanderspreizen der überlappenden Folienbereiche außerhalb der Nähte 4 und 5 war jedoch pulverförmiges Dämmaterial sichtbar, das deutlich die Strömungsspuren zeigte. jedoch recht gut an den benachbarten rauhen Flächen des Natron-Kraftpapieres anhaftete, so daß es auch bei einem Schütteln des Wärmedämmkörpers von Hand nicht herunterfiel. Beim Preßvorgang wurde eine Abdeckung 26 in Form in Fig. 6 veranschaulichten Gitters verwendet, das die ohnehin gekreppte Oberfläche weiter strukturierte, was aber nicht störte. Das gleichförmige Aussehen und die Maßhaltigkeit waren besser als beim Beispiel 3, erreichten jedoch noch nicht ganz die Qualität wie bei einem Glasfilamentgewebe.

Nach Aufheizen im Wärmespeicherofen zeigte sich eine nur geringfügige Rauch- und Geruchsentwicklung entsprechend den Beispielen 1 und 2. Der geringfügige Luftzutritt zum Natron-Kraftpapier durch die im Vergleich zu ihrer Größe sehr weitstehenden Perforationen konnte offensichtlich keine Entflammung des Natron-Kraftpapieres bewirken, so daß dieses wie bei vollständigem Luftabschluß lediglich vercrackte.

Beispiel 4

Die ungekreppte Verbundfolie des Beispiels 1 wurde zur Erzeugung von 160 Perforationen pro dm² genadelt, was einem gegenseitigen Perforationsabstand von etwa 6 mm entspricht und wordurch Lochdurchmesser von gut 0,2 mm erzeugt wurden. Die so mit Perforationen versehene Verbundfolie wurde sodann gemäß Beispiel 3 behandelt, wobei jedoch anstelle eines Gitters ein Stahlgewebe als Abdeckung 26 verwendet wurde.

Der Preßvorgang wurde mit derselben Geschwindigkeit durchgeführt, wie sie im Falle einer Verwendung mit Glasfilamentgewebe in der laufenden Fertigung üblich ist. An den Perforationen war keinerlei Austritt von Dämmaterial zu erkennen und auch im Bereich der Stiche 7 und der Spalte 9 war kein Wärmedämmaterial sichtbar. Die Spalte 9 war besser geschlossen als beim Beispiel 1, etwa ähnlich gut wie bei den Beispielen 2 und 3, was darauf zurückzuführen sein dürfte, daß infolge des doch erheblich verminderten Luftaustritts im Nahtbereich dort eine weniger starke Aufweitung erfolgte. Beim Auseinanderspreizen der überlappenden Folienbereiche außerhalb der Nähte 4 und 5 war kaum pulverförmiges Dämmaterial sichtbar, erheblich weniger als beim Beispiel 3, da die glatten Innenflächen der Folie etwaiges, durch die Ebene der Nähte 4 und 5 hindurchgetretenes Wärmedämmaterial nicht haften lassen.

Nach Aufheizen im Wärmespeicherofen zeigte sich ebenfalls eine nur geringfügige Rauch- und Geruchsentwicklung entsprechend den vorherigen Beispielen. Eine Entflammung des Natron-Kraftpieres trat offenbar nicht auf. Dennoch war die Platte weiterhin gut biegbar.

Die Luftdurchlässigkeit der Verbundfolie infolge der Nadelung betrug hier etwa 95 nm/Pa s, wobei die Messungen der Luftdurchlässigkeit bei den vorstehenden Beispielen nicht exakt nach DIN 53120, Teil 2, durchgeführt wurden, da eine gegenüber der dortigen Prüffläche von 10 cm² erheblich größere Prüffläche von 113 cm² (Durchmesser 12 cm) und ein Druck von 500 mmWS statt 100 mmWS benutzt wuden. Obwohl diese unterschiedlichen Parameter, vor allem der erhöhte Druck, sich streng genommen nicht linear zurückkrechnen lassen, war dies hier zulässig, da es im Rahmen der vorliegenden Untersuchungen nicht auf möglichst genaue Meßwerte, sondern ausschließlich auf eine Vorstellung der Größenordnung der Luftdurchlässigkeit ankommt.

**Patentansprüche**

1. Wärmedämmplatte mit einer durch wenigstens eine Naht (4, 5) geschlossenen flexiblen Umhüllung (1) und einem in der geschlossenen Umhüllung verdichteten teilchenförmigen hochdispersen Wärmedämmaterial (2) auf der Basis von aus der Flammenhydrolyse gewonnemen Metall-oxid-Aerogel, wie Kieselsäure- und/oder Aluminium-oxid-Aerogel, gegebenenfalls mit mineralischen Fasern und Trübungsmittel, dadurch gekennzeichnet, daß die Umhüllung (1) aus einer Verbundfolie (1a) besteht, deren eine zumindest weitgehend geschlossene Oberfläche aufweisende Außenschicht (22) aus einem im wesentlichen luftundurchlässigen Werkstoff eine flammhemmende Ausrüstung für die Innenschicht (21) aus brennbarem Material dadurch ergibt, daß die Außenschicht (22) eine gegenüber dem Flammpunkt der Innenschicht (21) höhere Zersetzungstemperatur, vorzugsweise über 500 °C, besitzt.

2. Wärmedämmplatte nach Anspruch 1, dadurch gekennzeichnet, daß die Außenschicht (22) eine solche Temperaturbeständigkeit aufweist, daß sie bei einstündiger Einwirkung der Einsatztemperatur ihre körperliche Integrität behält.

3. Wärmedämmplatte nach Anspruch 1 oder 2, dadurch gekennzeichnet, daß die Außenschicht (22) auf einer temperaturbeständigen organischen Konststoffschicht, insbesondere einem hochtemperaturbeständigen Lack besteht.

4. Wärmedämmplatte nach Anspruch 1 oder 2, dadurch gekennzeichnet, daß die Außenschicht (22) aus einer anorganischen mineralischen Schicht, insbesondere auf der Basis von Kieselgel oder Kieselsol besteht.

5. Wärmedämmplatte nach Anspruch 1 oder 2, dadurch gekennzeichnet, daß die Außenschicht (22) aus Metall besteht.

6. Wärmedämmplatte nach Anspruch 5, dadurch gekennzeichnet, daß die Außenschicht (22) aus einer Metallfolie, insbesondere einer Aluminiumfolie besteht, die mit der Innenschicht (21) durch einen Kleber (23) verbunden ist.

7. Wärmedämmplatte nach einem der Ansprüche 1 bis 6, dadurch gekennzeichnet, daß die Außenschicht (22) eine Dicke von weniger als 20 μm, insbesondere weniger als 10 μm aufweist.

8. Wärmedämmplatte nach einem der Ansprüche 1 bis 7, dadurch gekennzeichnet, daß die Innenschicht (21) ein Verbund von Fasern (25) wie Zellstoffasern, insbesondere ein Papier ist.

9. Wärmedämmplatte nach einem der Ansprüche 1 bis 8, dadurch gekennzeichnet, daß die Umhüllung (1) Perforationen (24) aufweist, die zumindest die Außenschicht (22) durchsetzen.

10. Wärmedämmplatte nach Anspruch 9, dadurch gekennzeichnet, daß die Perforationen (24) einen Lochdurchmesser von weniger als 1 mm, vorzugsweise von 0,1 bis 0,5 mm, insbesondere ca. 0,2 mm aufweisen.

11. Wärmedämmplatte nach Anspruch 9 oder 10, dadurch gekennzeichnet, daß die Perforationen (24) in einem gegenseitig im Abstand von mehreren Millimetern, insbesondere von etwa 5 bis 10 mm angeordnet sind.

12. Wärmedämmplatte nach einem der Ansprüche 1 bis 11, dadurch gekennzeichnet, daß die Verbundfolie (1a) allenfalls geringe Luftdurchlässigkeit von vorzugsweise weniger als 200 nm/Pa s., insbesondere von weniger als 20 nm/Pa s., aufweist, und daß die Naht (4, 5) luftdurchlässig gefertigt ist.

13. Wärmedämmplatte nach Anspruch 12, dadurch gekennzeichnet, daß die Naht (4, 5) eine Nähnaht, insbesondere eine Kettenstichnaht, ist, deren Stiche (7) einen gegenseitigen Abstand von wenigstens dem 4-fachen, vorzugsweise wenigstens dem 6-fachen, insbesondere wenigstens dem 8-fachen des Durchmessers des Nähfadens (6) haben.

14. Wärmedämmplatte nach Anspruch 13, dadurch gekennzeichnet, daß der Nähfaden (6) einen Durchmesser zwischen etwa 0,1 und 1 mm, vorzugsweise zwischen 0,5 und 1 mm besitzt.

15. Wärmedämmplatte nach Anspruch 13 oder 14, dadurch gekennzeichnet, daß die Abstände zwischen benachbarten Stichen (7) wenigstens etwa 3 mm betragen.

16. Wärmedämmplatte nach einem der Ansprüche 13 bis 15, dadurch gekennzeichnet, daß die Abstände zwischen benachbarten Stichen (7) höchstens der ungefähren mittleren Länge von im Dämmaterial (2) enthaltenen Fasern (11) entsprechen, insbesondere unter 8 mm, vorzugsweise unter 6 mm liegen.

17. Wärmedämmplatte nach einem der Ansprüche 12 bis 16, dadurch gekennzeichnet, daß die Naht (4, 5) wenigstens entlang dreier Seiten der Umhüllung (1) vorliegt.

18. Wärmedämmplatte nach einem der Ansprüche 12 bis 17, dadurch gekennzeichnet, daß die Naht (4, 5) nachträglich abgedichtet ist.

19. Verfahren zur Herstellung einer Wärmedämmplatte nach wenigstens einem der Ansprüche 1 bis 18, bei dem das pulverförmige Dämmaterial in die an einer Seite offene Umhüllung eingefüllt und die Umhüllung durch eine Abschlußnaht vollständig geschlossen wird, und die so gefüllte Umhüllung zwischen Pressenplatten gepreßt wird, dadurch gekennzeichnet, daß während des Preßvorgangs am randseitigen Außenumfang der Umhüllung zwischen den Pressenplatten Unterdruck erzeugt wird.

20. Verfahren nach Anspruch 19, dadurch gekennzeichnet, daß zwischen den Pressenplatten und der Umhüllung während des Preßvorganges Luftströmungskanäle zum randseitigen Außenumfang der Umhüllung freigehalten werden.

21. Verfahren nach Anspruch 19 oder 20, dadurch gekennzeichnet, daß aus der Umhüllung austretendes Dämmaterial abgesaugt und gegebenenfalls dem Prozeß wieder zugeführt wird.

22. Vorrichtung zur Durchführung des Verfahrens nach wenigstens einem der Ansprüche 19 bis 21, mit zwei unter Druck gegeneinander führbaren Pressenplatten (8) und einer Absaugeinrichtung mit wenigstens einem Saugkanal für Luft, dadurch gekennzeichnet, daß der Saugkanal der Absaugeinrichtung im Bereich des Randes der Pressenplatten (8) zwischen diesen mündet, und daß wenigstens eine der Pressenplatten (8) in ihrem zur Aufbringung des Drucks wirksamen Bereich eine Konturierung (Abdeckung 26) der Oberfläche aufweist, welche zum Randbereich der Pressenplatte (8) hin offene Luftströmungskanäle (27) bildet.

23. Vorrichtung nach Anspruch 22, dadurch gekennzeichnet, daß die Oberfläche der Pressenplatten (8) mit einer die Luftströmungskanäle (27) bildende Abdeckung (26) versehen ist.

24. Vorrichtung nach Anspruch 23, dadurch gekennzeichnet, daß die Abdeckung ein Gitter mit in unterschiedlichen Ebenen übereinander angeordneten Gitterstäben (26a, 26b), ein grobes Gewebe, Gelege, Gewirke oder dergleichen ist.

## Claims

1. A heat insulating board comprising a sheath (1), which is closed by at least one seam (4, 5), and a particulate, highly dispersed heat insulating material (2), which has been compacted within the closed sheath and contains metal oxide aerogel produced by flame hydrolysis, such as silica and/or alumina aerogel, and optionally contains mineral fibers and opacifiers, characterized in that the sheath (1) consists of a composite sheet (1a), which comprises an outer layer (22) that has an at least substantially closed surface and consists of a substantially air-impermeable materials and on the inner layer (21) consisting of combustible material constitutes a flame-retardant finish in that the decomposition temperature of the outer layer (22) is higher than the flash point of the inner layer (21) and preferably exceeds 500 °C.

2. A heat insulating board according to claim 1, characterized in that the outer layer (22) has such a temperature stability that its physical integrity is preserved during an exposure to the temperature of use for one hour.

3. A heat insulating board according to claim 1 or 2, characterized in that the outer layer (22) consists of a layer of a temperature-stable organic synthetic material, particularly of a paint having a high temperature stability.

4. A heat insulating board according to claim 1 or 2, characterized in that the outer layer (22) consists of an inorganic mineral layer, which preferably consists at least in part of silica gel or silica sol.

5. A heat insulating board according to claim 1 or 2, characterized in that the outer layer (22) consists of metal.

6. A heat insulating board according to claim 5, characterized in that the outer layer (22) consists of a metal foil, particularly of an aluminum foil, which is joined by a adhesive (23) to the inner layer (21).

7. A heat insulating board according to any of claims 1 to 6, characterized in that the outer layer (22) has a thickness below 20 μm, particularly below 10 μm.

8. A heat insulating board according to any of claims 1 to 7, characterized in that the inner layer (21) is a composite of fibers (25), such as cellulose fibers, and particularly consists of a paper.

9. A heat insulating board according to any of claims 1 to 8, characterized in that the sheath (1) has perforations (24), which extend at least through the outer layer (22).

10. A heat insulating board according to claim 9, characterized in that the perforations have a hole diameter below 1 mm, preferably of 0.1 to 0.5 mm, particularly of about 0.2 mm.

11. A heat insulating board according to claim 9 or 10, characterized in that the perforations (24) have a spacing of a plurality of millimetres, particularly of about 5 to 10 mm.

12. A heat insulating board according to any of claims 1 to 11, characterized in that the flexible sheet (1a) has optionally a low permeability to air, preferably below 200 nm/Pa s, particularly below 20 nm/Pa s, and the seam (4, 5) is permeable to air.

13. A heat insulating board according to claim 12, characterized in that the seam (4, 5) is a stitched seam, particularly a stain stitch seam, the stitches (7) of which have a spacing which is at least four times and preferably at least six times and particularly at least eight times the diameter of the sewing thread (6).

14. A heat insulating board according to claim 13, characterized in that the sewing thread (6) has a diameter between about 0.1 and 1 mm, preferably between 0.5 and 1 mm.

15. A heat insulating board according to any of claims 13 to 14, characterized in that adjacent stitches (7) have a spacing of at least about 3 mm.

16. A heat insulating board according to any of claims 13 to 15, characterized in that adjacent stitches (7) have a spacing which is not in excess of the approximate average length of fibers (11) contained in the insulating material (2) and which is preferably below 8 mm and particularly below 6 mm.

17. A heat insulating board according to any of claims 12 to 16, characterized in that the seam (4, 5) is provided along at least three sides of the sheath (1).

18. A heat insulating board according to any of claims 12 to 17, characterized in that the seam (4, 5) is subsequently sealed.

19. A process of manufacturing a heat insulating board according to any of claims 1 to 18, wherein the pulverulent insulating material is charged into the sheath when the same is open on one side, the sheath is completely closed by a closing seam, and the thus filled sheath is pressed between press platens, characterized in that a subatmospheric pressure is generated between the press platens at the outside peripheral edge surface of the sheath.

20. A process according to claim 19, characterized in that air flow passages leading to the outside peripheral edge surface of the sheath are left free during the pressing operation between the press platens and the sheath.

21. A process according to claim 19 or 20, characterized in that insulating material leaving the sheath is sucked off and is optionally recycled to the process.

22. Apparatus for carrying out the process according to any of claims 19 to 21, comprising two press platens (8) which are adapted to be moved towards each other under pressure, and exhausting means having at least one suction passage for air, characterized in that the suction passage of the exhausting means opens between the press platens (8) adjacent to the edge thereof and at least one of the press platens (8) is provided with a contoured surface (covering 26) in that portion which serves to apply pressure, whereby air flow passages (27) are formed which are open toward the edge portion of the press platen (8).

23. Apparatus according to claim 22, characterized in that the surface of the press platens (8) is provided with a cover (26), which defines the air flow passages (27).

24. Apparatus according to claim 23, characterized in that the cover consists of a grid having grid bars (26a, 26b), which are superimposed in different planes, or consists of a coarse woven fabric, thread layer, knitted fabric or the like.

## Revendications

1. Plaque d'isolation thermique comportant une enveloppe (1) souple fermée par au moins une couture (4, 5) et un matériau d'isolation thermique (2) en particules à dispersion élevée compacté dans l'enveloppe fermée, qui est composée à partir d'un aérogel d'oxide métallique obtenu par hydrolyse à la flamme, tels que des aérogels d'oxide de silice ou d'aluminium, comportant le cas échéant des fibres minérales et des opacifiants, caractérisée en ce que l'enveloppe (1) consiste en une couche feuilletée (1a) qui comporte une couche extérieure (22) ayant une surface au moins substantiellement fermée et qui consiste en un matériau substantiellement imperméable à l'air et constitue pour la couche intérieure (21) en matériau combustible un apprêt ignifuge par le fait que la couche extérieure (22) possède une température de décomposition supérieure au point d'inflammation de la couche intérieure (21), de préférence au-dessus de 500 °C.

2. Plaque d'isolation thermique selon la revendication 1, caractérisée en ce que la couche extérieure (22) possède une stabilité à la température telle à maintenir son intégrité physique lorsqu'elle est exposée pendant une heure à la température d'utilisation.

3. Plaque d'isolation thermique selon les revendications 1 ou 2, caractérisée en ce que la couche extérieure (22) consiste en une couche de matière synthétique organique stable à la température et consiste notamment en un vernis stable aux températures élevées.

4. Plaque d'isolation thermique selon la revendication 1 ou 2, caractérisée en ce que la couche extérieure (22) consiste en une couche minérale anorganique, notamment sur la base de gel de silice ou de sol de silice.

5. Plaque d'isolation thermique selon la revendication 1 ou 2, caractérisée en ce que la couche extérieure (22) consiste en métal.

6. Plaque d'isolation thermique selon la revendication 5, caractérisée en ce que la couche extérieure (22) consiste en une feuille de métal, notamment une feuille d'aluminium qui est liée à la couche intérieure (21) par une colle (23).

7. Plaque d'isolation thermique selon l'une des revendications 1 à 6, caractérisée en ce que la couche extérieure (22) possède une épaisseur inférieure à 20 µm, notamment inférieure à 10 µm.

8. Plaque d'isolation thermique selon l'une des revendications 1 à 7, caractérisée en ce que la couche intérieure (21) est une couche composite de fibres (25) telles que fibres cellulosiques, notamment du papier.

9. Plaque d'isolation thermique selon l'une des revendications 1 à 8, caractérisée en ce que l'enveloppe (1) possède des perforations (24) qui traversent au moins la couche extérieure (22).

10. Plaque d'isolation thermique selon la revendication 9, caractérisée en ce que les perforations (24) ont un diamètre de trou inférieur à 1 mm, de préférence de 0,1 à 0,5 mm, notamment environ 0,2 mm.

11. Plaque d'isolation thermique selon la revendication 9 ou 10, caractérisée en ce que les perforations (24) sont pratiquées à une distance réciproque de plusieurs millimètres, notamment à une distance d'environ 5 à 10 mm.

12. Plaque d'isolation thermique selon l'une des revendications 1 à 11, caractérisée en ce que la couche feuilletée (1a) a une perméabilité à l'air tout au plus faible de moins de 200 nm/Pa s de préférence, notamment de moins de 20 nm/Pa s, et que la couture (4, 5) est perméable à l'air.

13. Plaque d'isolation thermique selon la revendication 12, caractérisée en ce que la couture (4, 5) est une couture cousue, notamment une couture à point chaînette, dont les points (7) ont une distance réciproque d'au moins du quadruple, de préférence au moins du sextuple, notamment au moins de l'octuple du diamètre des fils à coudre (6).

14. Plaque d'isolation thermique selon la revendication 13, caractérisée en ce que les fils à coudre (6) possèdent un diamètre entre environ 0,1 et 1 mm, de préférence entre 0,5 et 1 mm.

15. Plaque d'isolation thermique selon la revendication 13 ou 14, caractérisée en ce que les distances entre points (7) voisins est au moins de 3 mm.

16. Plaque d'isolation thermique selon l'une des revendications 13 à 15, caractérisée en ce que les distances entre points (7) voisins correspondent au maximum à la longueur moyenne approximative des fibres (11) contenues dans le matériau d'isolation (2), notamment moins de 8 mm, de préférence moins de 6 mm.

17. Plaque d'isolation thermique selon l'une des revendications 12 à 16, caractérisée en ce que la couture (4, 5) s'étend au moins le long de trois côtés de l'enveloppe (1).

18. Plaque d'isolation thermique selon l'une des revendications 12 à 17, caractérisée en ce que la couture (4, 5) est scellée a posteriori.

19. Procédé pour la fabrication d'une plaque d'isolation thermique selon au moins l'une des revendications 1 à 18 dans lequel le matériau d'isolation en forme de poudre est rempli dans l'enveloppe ouverte d'un côté et l'enveloppe est fermée intégralement par une dernière couture, l'enveloppe remplie de la sorte étant comprimée entre des plaques de compression caractérisé en ce qu'une dépression est produite entre les plaques de compression au bord périphérique extérieur de l'enveloppe.

20. Procédé selon la revendication 19, caractérisé en ce que des passages pour le flux d'air débouchant sur la surface du bord périphérique extérieur de l'enveloppe sont laissés libres entre les plaques de compression et l'enveloppe pendant l'opération de compression.

21. Procédé selon la revendication 19 ou 20, caractérisé en ce que le matériau d'isolation sortant de l'enveloppe est aspiré et recyclé dans le procédé.

22. Dispositif pour l'exécution du procédé selon au moins une des revendications 19 à 21, comportant deux plaques de compression (8) pouvant être réciproquement approchées sous pression et un dispositif d'aspiration ayant au moins un canal aspirateur pour l'air caractérisé en ce que le canal d'aspiration du dispositif d'aspiration débouche dans la zone du bord des plaques de compression (8) entre ces dernières, et qu'au moins une des plaques de compression (8) comporte dans la zone servant à appliquer la pression une surface à contour (couverture 26) qui vers les bords de la plaque de compression (8) laisse des passages ouverts pour le flux d'air (27).

23. Dispositif selon la revendication 22, caractérisé en ce que la surface des plaques de compression (8) sont pourvues d'une couverture (26) formant les passages (27) pour le flux d'air.

24. Dispositif selon la revendication 23, caractérisé en ce que la couverture est une grille comportant des barres de grille (62a. 26b) superposées en différents plans. ou un tissu grossier. ou une couche de fils. un tissu tricoté ou une structure semblable.

Fig. 1

Fig. 2

Fig. 5

**Fig. 3**

**Fig. 6**

**Fig. 4**